# EUROPEAN PATENT APPLICATION

(11) **EP 3 148 270 A1**
(43) Date of publication of application: **29.03.2017**
(21) Application number: 15306483.7
(22) Date of filing: 24.09.2015
(51) Int. Cl.: H04W 72/00, H04W 76/04

(54) **MULTIPOINT TRANSMISSION**

(71) Applicant: ALCATEL LUCENT, 92100 Boulogne-Billancourt (FR)
(72) Inventor: WORRALL, Chandrika, Newbury, Berkshire RG14 6LE (GB)
(74) Representative: Leppard, Andrew John

(57) **Abstract**

A user equipment method, user equipment, a network node method, a network node and a computer program product are disclosed. The user equipment method comprises: configuring monitoring periods within which to monitor a downlink control channel for a radio resource allocation associated with a group to which the user equipment is subscribed, the radio resource allocation identifying radio resources allocated within a downlink traffic channel which carry single cell point to multipoint transmissions traffic for the group. In this way, group communication may occur within the monitoring periods, which helps to conserve resources and reduce power consumption of user equipment subscribed to particular groups.

## Description

### FIELD OF THE INVENTION

The present invention relates to a user equipment method, user equipment, a network node method, a network node and a computer program product.

### BACKGROUND

Wireless telecommunications networks are known. In a cellular system, radio coverage is provided by area. Those areas of radio coverage are known as cells. Abase station is located in each cell to provide the radio coverage. User equipment in each cell receives information and data from the base station and transmits information and data to the base station.

Information and data transmission by the base station to the user equipment occurs on channels of radio carriers known as downlink carriers. Information and data transmission by user equipment to the base station occurs on uplink data channels of radio carriers known as uplink carriers.

Base stations can transmit to an individual user equipment using unicast transmissions. Base stations can also transmit to a group of user equipment using multipoint transmissions, one example of which is single cell point to multipoint transmissions.

Although being able to perform both unicast and multipoint transmissions is advantageous, unexpected consequences can occur. Accordingly, it is desired to provide improved techniques for multipoint transmissions.

### SUMMARY

According to a first aspect, there is provided a user equipment method, comprising: configuring monitoring periods within which to monitor a downlink control channel for a radio resource allocation associated with a group to which the user equipment is subscribed, the radio resource allocation identifying radio resources allocated within a downlink traffic channel which carry single cell point to multipoint transmissions traffic for the group.

The first aspect recognises that support is required for single cell point to multipoint (SC-PTM) transmission. SC-PTM supports both idle and connected user equipment.

A service is scheduled in SC-PTM over the Physical Downlink Shared Channel (PDSCH) using physical resource block (PRB) allocation. Thus SC-PTM enables radio resource allocation as per need basis. Many logical channels such as the Dedicated Traffic Channel (DTCH), the Dedicated Control Channel (DCCH), the Common Control Channel (CCCH) and the Broadcast Control Channel (BCCH) are mapped onto the Downlink Shared Channel (DL-SCH) which is transmitted over PDSCH. The resource allocation for PDSCH is signalled over the Physical Downlink Control Channel (PDCCH). DTCH, DCCH and CCCH are user equipment-specific logical channels while BCCH is a common channel.

In the connected mode, the user equipment can be configured to perform discontinuous reception to save user equipment battery consumption. Discontinuous reception is designed based on a set of timers and a concept called "active time", where the user equipment is only required to monitor PDCCH while in "active time". Even though the user equipment-specific and common signals have been transmitted using DL-SCH, the discontinuous reception principle was defined based on the reception of PDCCH regardless of what type of information scheduled using PDCCH. For user equipment-specific channels, resource scheduling reflects the traffic arrival pattern for ongoing services. Therefore, discontinuous reception active time is extended according to the reception of PDCCH, i.e.: the traffic pattern. With regards to common channels, only BCCH is mapped onto DL-SCH. The user equipment when RRC connected may read the system information, i.e. BCCH, at any time if required. Moreover the requirement for system information reading for RRC connected user equipment is not frequent. Therefore, even though the same discontinuous reception principle is used for BCCH reception as for user equipment-specific channels, the impact on the user equipment battery consumption is not significant.

SC-PTM reception requires the transmission of data intended for a group of user equipment over DL-SCH. In order to cater for a group of user equipment, the data is scheduled with scheduling periodicity. In other words, the traffic shaping may be performed at the core network and also at the base station. Therefore, the scheduling of PDCCH doesn't reflect the traffic arrival pattern. There is time gap (scheduling period) between the scheduling of adjacent packets.

If the same discontinuous reception principle that is based on reception of PDCCH is followed, the user equipment is in Active time unnecessarily in between the occurrence of two SC-PTM scheduling.

In order to avoid unnecessary battery consumption, the first aspect uses a discontinuous reception principle which takes into account the type of received information channel which enhances the user equipment power consumption by RRC connected user equipment whether receiving SC-PTM and/or unicast traffic.

Accordingly, a method is provided. The method may be performed by user equipment. The method may comprise configuring monitoring periods. Monitoring periods may be those periods within which to monitor a downlink control channel. The downlink control channel may be monitored for a radio resource allocation. The radio resource allocation may be associated with a group of user equipment to which the user equipment is subscribed or a member of. The radio resource allocation associated with the group may identify radio resources allocated within a downlink traffic channel. Those resources within the downlink traffic channel may carry traffic for the group. The traffic may be single cell point-to-multipoint transmission traffic. In this way, group communication may occur within the monitoring periods, which helps to conserve resources and reduce power consumption of user equipment subscribed to particular groups.

In one embodiment, the configuring comprises receiving a group identifier identifying the group to which the user equipment is subscribed. Accordingly, an indication may be received by the user equipment of a group identifier which identifies a group to which the user equipment is subscribed.

In one embodiment, the group identifier comprises a G-RNTI.

In one embodiment, each monitoring period is separated by an interval period within which not to monitor the downlink control channel for a radio resource allocation associated with the group. Accordingly, the monitoring periods (during which monitoring of the downlink control channel is activated) may be interspersed with interval periods where the user equipment may deactivate monitoring of the downlink control channel. This helps to preserve resources and conserve power.

In one embodiment, the interval period is defined by an interval timer received by the user equipment. Accordingly, an interval timer value may be received by the user equipment which defines the length of the interval period. In one embodiment, the interval timer is a drx-GroupScheduleTimer.

In one embodiment, the configuring comprises activating the interval timer following identifying a radio resource allocation associated with the group and performing no monitoring of the downlink control channel while the interval timer is running. Accordingly, the interval timer may be activated after a radio resource allocation associated with the group is identified. Monitoring of the downlink control channel may be deactivated while the interval timer is running. This provides a convenient mechanism for setting the length of the interval during which no monitoring of the downlink control channel takes place.

In one embodiment, each monitoring period has a duration during which to monitor the downlink control channel for a radio resource allocation associated with the group. Accordingly, a monitoring period may be provided having a particular length or duration during which monitoring of the downlink control channel is activated.

In one embodiment, the duration is defined by a duration timer received by the user equipment. Accordingly, the duration or length of the monitoring period may be determined by a duration timer value received by the user equipment. In one embodiment, the duration timer comprises a drx-GroupTransmissionTimer.

In one embodiment, the configuring comprises activating the duration timer on expiry of the interval timer and performing monitoring of the downlink control channel while the duration timer is running. Accordingly, the duration timer may be activated when the interval timer completes and monitoring of the downlink control channel may be activated while the duration timer is running or being executed.

In one embodiment, the configuring comprises activating the interval timer on expiry of the duration timer and performing no monitoring of the downlink control channel while the interval timer is running. Accordingly, the interval timer may be activated when the duration timer completes and monitoring of the downlink control channel may be deactivated while the interval timer is running.

In one embodiment, the configuring comprises configuring monitoring periods for each of a plurality of groups to which the user equipment is subscribed. Accordingly, monitoring periods for a number of different groups may be configured. In one embodiment, the monitoring period and interval period is configured for each of the different groups. In one embodiment, the interval timer and duration timer is configured for each of the different groups.

In one embodiment, each monitoring period is one of unique and common to each group. Accordingly, groups may have a different monitoring period and/or interval period or the monitoring period and/or interval period is the same for groups.

In one embodiment, the method comprises configuring monitoring periods within which to monitor the downlink control channel for a radio resource allocation associated the user equipment, the radio resource allocation identifying radio resources allocated within a downlink traffic channel which unicast traffic for the user equipment. Accordingly, monitoring periods and/or interval periods maybe configured also for unicast traffic.

In one embodiment, the method comprises monitoring the downlink control channel during each of the monitoring periods. Accordingly, monitoring of the downlink channel may be activated during the monitoring periods.

In one embodiment, the method comprises performing no monitoring of the downlink control channel outside of each of the monitoring periods. Accordingly, monitoring of the downlink channel may be deactivated other than during any of the monitoring periods.

In one embodiment, the method comprises ceasing to configure monitoring periods for a group when the downlink control channel carries no radio resource allocation associated with the group during a number of the monitoring periods. Accordingly, monitoring of the downlink control channel may be deactivated for a particular group when radio resource allocation fails to occur for that group during those monitoring periods. In this way, monitoring can cease to occur on the assumption that no further traffic is intended to be sent in the short term.

According to a second aspect, there is provided user equipment, comprising: configuration logic operable to configure monitoring periods within which to monitor a downlink control channel for a radio resource allocation associated with a group to which the user equipment is subscribed, the radio resource allocation identifying radio resources allocated within a downlink traffic channel which carry single cell point to multipoint transmissions traffic for the group.

In one embodiment, the configuration logic is operable to receive a group identifier identifying the group to which the user equipment is subscribed.

In one embodiment, the group identifier comprises a G-RNTI.

In one embodiment, each monitoring period is separated by an interval period within which not to monitor the downlink control channel for a radio resource allocation associated with the group.

In one embodiment, the configuration logic is operable to receive an interval timer defining the interval period.

In one embodiment, the configuration logic is operable to activate the interval timer following identification of a radio resource allocation associated with the group and is operable to perform no monitoring of the downlink control channel while the interval timer is running.

In one embodiment, each monitoring period has a duration during which to monitor the downlink control channel for a radio resource allocation associated with the group.

In one embodiment, the configuration logic is operable to receive a duration timer defining the duration.

In one embodiment, the configuration logic is operable to activate the duration timer on expiry of the interval timer and to perform monitoring of the downlink control channel while the duration timer is running.

In one embodiment, the configuration logic is operable to activate the interval timer on expiry of the duration timer and to perform no monitoring of the downlink control channel while the interval timer is running.

In one embodiment, the configuration logic is operable to configure monitoring periods for each of a plurality of groups to which the user equipment is subscribed.

In one embodiment, each monitoring period is one of unique and common to each group.

In one embodiment, the configuration logic is operable to configure monitoring periods within which to monitor the downlink control channel for a radio resource allocation associated the user equipment, the radio resource allocation identifying radio resources allocated within a downlink traffic channel which unicast traffic for the user equipment.

In one embodiment, the configuration logic is operable to monitor the downlink control channel during each of the monitoring periods.

In one embodiment, the configuration logic is operable to perform no monitoring of the downlink control channel outside of each of the monitoring periods.

In one embodiment, the configuration logic is operable to cease to configure monitoring periods for a group when the downlink control channel carries no radio resource allocation associated with the group during a number of the monitoring periods.

According to a third aspect, there is provided a network node method, comprising: configuring user equipment with monitoring periods within which to monitor a downlink control channel for a radio resource allocation associated with a group to which the user equipment is subscribed, the radio resource allocation identifying radio resources allocated within a downlink traffic channel which carry single cell point to multipoint transmissions traffic for the group.

In one embodiment, the configuring comprises transmitting a group identifier identifying the group to which the user equipment is subscribed.

In one embodiment, the group identifier comprises a G-RNTI.

In one embodiment, each monitoring period is separated by an interval period within which user equipment are configured not to monitor the downlink control channel for a radio resource allocation associated with the group.

In one embodiment, the method comprises transmitting an interval timer defining the interval period to the user equipment.

In one embodiment, each monitoring period has a duration during which user equipment are configured to monitor the downlink control channel for a radio resource allocation associated with the group.

In one embodiment, the method comprises transmitting a duration timer defining the duration to the user equipment.

In one embodiment, the configuring comprises configuring monitoring periods for each of a plurality of groups to which the user equipment is subscribed.

In one embodiment, each monitoring period is one of unique and common to each group.

In one embodiment, the method comprises configuring monitoring periods within which user equipment are to monitor the downlink control channel for a radio resource allocation associated the user equipment, the radio resource allocation identifying radio resources allocated within a downlink traffic channel which unicast traffic for the user equipment.

In one embodiment, the method comprises transmitting a radio resource allocation associated with a group on a downlink control channel within monitoring periods associated with that group.

According to a fourth aspect, there is provided a network node, comprising: configuring logic operable to configure user equipment with monitoring periods within which to monitor a downlink control channel for a radio resource allocation associated with a group to which the user equipment is subscribed, the radio resource allocation identifying radio resources allocated within a downlink traffic channel which carry single cell point to multipoint transmissions traffic for the group.

In one embodiment, the configuring logic is operable to transmit a group identifier identifying the group to which the user equipment is subscribed.

In one embodiment, the group identifier comprises a G-RNTI.

In one embodiment, each monitoring period is separated by an interval period within which user equipment are configured not to monitor the downlink control channel for a radio resource allocation associated with the group.

In one embodiment, the configuring logic is operable to transmit an interval timer defining the interval period to the user equipment.

In one embodiment, each monitoring period has a duration during which user equipment are configured to monitor the downlink control channel for a radio resource allocation associated with the group.

In one embodiment, the configuring logic is operable to transmit a duration timer defining the duration to the user equipment.

In one embodiment, the configuring logic is operable to configure monitoring periods for each of a plurality of groups to which the user equipment is subscribed.

In one embodiment, each monitoring period is one of unique and common to each group.

In one embodiment, the configuring logic is operable to configure monitoring periods within which user equipment are to monitor the downlink control channel for a radio resource allocation associated the user equipment, the radio resource allocation identifying radio resources allocated within a downlink traffic channel which unicast traffic for the user equipment.

In one embodiment, the configuring logic is operable to transmit a radio resource allocation associated with a group on a downlink control channel within monitoring periods associated with that group.

According to a fifth aspect, there is provided a computer program product operable, when executed on a computer, to perform the method of the first or third aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates the discontinuous reception operation based on newly-introduced group-based timers;
Figure 2 illustrates the discontinuous reception operation when the user equipment is configured with a legacy long discontinuous reception cycle for unicast traffic and using the newly-introduced SC-PTM-based timers for SC-PTM traffic; and
Figure 3 illustrates the discontinuous reception operation when receiving unicast and SC-PTM traffic.

### DESCRIPTION OF THE EMBODIMENTS

Before discussing the embodiments in any more detail, first an overview will be provided. Embodiments provide a technique whereby discontinuous reception can be utilized for multicast transmissions. Such multicast transmissions may utilize the same downlink control channel used for the scheduling of unicast transmissions and may be subject to existing discontinuous reception operation with regard to that downlink control channel whereby monitoring of that downlink channel is activated and deactivated for unicast transmissions. Accordingly, in addition to any existing monitoring periods configured within the user equipment for the monitoring of the downlink control channel for resource allocation for unicast transmissions, further monitoring periods are configured for the monitoring of resource allocations for multicast transmissions. This provides a simple yet effective arrangement whereby the user equipment will monitor the downlink control channel during any unicast or multicast monitoring periods, but can have monitoring deactivated at all other times in order to conserve resources and power. Embodiments also enable multiple monitoring periods to be configured, for each of a number of different multicast transmissions intended for different groups. A simple mechanism of a group identifier is utilized in order to identify the groups to which the user equipment is subscribed and to identify any resource allocation signalled in the downlink control channel through its association with that group identifier. Once the multicast traffic ceases to be needed to be transmitted, this can be detected by the user equipment through the failure to allocate resources within the monitoring periods for that group and the user equipment may then cease to perform any further monitoring for that group until instructed to do so, typically using RRC signalling. This also helps to conserve resources and minimize power.

Embodiments enable common discontinuous reception operation for both user equipment-specific traffic and common or group traffic. Embodiments also enable enhanced user equipment power saving by taking into account the type of traffic received by the user equipment.

Embodiments support user equipment discontinuous reception operations while receiving services using single cell point to multipoint (SC-PTM) transmissions (traffic intended for a group of user equipment), optionally together with unicast transmissions (user equipment-specific traffic) by Radio Resource Control (RRC)-connected user equipment.

The following techniques are used for differentiation of traffic type (type of traffic channel) for the operation of discontinuous reception.

### Timers

Two new discontinuous reception timers are introduced for discontinuous reception operations related to the reception of SC-PTM traffic. These timers are used to differentiate the SC-PTM reception activity from unicast reception activity. A drx-GroupScheduleTimer and a drx-GroupTransmissionTimer controls the user equipment's discontinuous reception operation with respect to the reception of SC-PTM for a given Global System for Mobile Communications/Enhanced Data rates for Global Evolution Radio Access Network Radio Network Temporary Identifier (G-RNTI) allocated to the user equipment. Upon reception of information on the Physical Downlink Control Channel (PDCCH) addressed to the G-RNTI, the user equipment starts the drx-GroupScheduleTimer and stops the ongoing (if any) drx-GroupTransmissionTimer. At the expiry of the drx-GroupScheduleTimer, the user equipment starts the drx-GroupTransmissionTimer.

The reception-active (reception monitoring) time is modified to contain the time while drx-GroupTransmissionTimer is running hence achieving a common discontinuous reception operation for reception of SC-PTM and unicast traffic.

These new timers maybe defined on a per G-RNTI or on a group of G-RNTIs basis. That is to say that each G-RNTI or group of G-RNTIs may have separate timers.

The above procedure supports flexible scheduling for SC-PTM traffic while at the same time achieving a common discontinuous reception operation for unicast and SC-PTM traffic by RRC_Connected user equipment.

SC-PTM is designed to have use of PDCCH for radio resource scheduling in a similar manner to unicast transmissions. Therefore a common discontinuous reception operation is designed for reception of unicast and SC-PTM traffic. In order to differentiate the discontinuous reception operation for unicast traffic from the reception of SC-PTM traffic, new timers are introduced which are controlled based on the reception of PDCCH addressed to the G-RNTI allocated to user equipment. As the SC-PTM reception operation is differentiated from the unicast reception operation, the impact of SC-PTM reception on unicast discontinuous reception and the user equipment battery consumption is unaffected by the introduction of SC-PTM. The timer values for each G-RNTI maybe provided as part of the RRC_Connection procedure.

### Timer Activation

As mentioned above, two new discontinuous reception timers are introduced such that upon receiving PDCCH transmissions addressed to a G-RNTI allocated to the user equipment, the user equipment is required start the newly-introduced timer; drx-GroupScheduleTimer. Upon the expiry of the drx-GroupScheduleTimer, the second newly-introduced timer; drx-GroupTransmissionTimer, is started.

Active time (the periods during with the user equipment is monitoring PDCCH) is redefined to take into account the drx-GroupTransmissionTimer. Thus, the active time includes the time while:
onDurationTimer or drx-InactivityTimer or drx-RetransmissionTimer or mac-ContentionResolutionTimer or drx-GroupTransmissionTimer is running.

Hence, it can be seen that the active time will be any of the periods when the user equipment is configured by the timers to monitor for SC-PTM or unicast traffic and otherwise no monitoring of PDCCH will occur.

In one embodiment, when no SC-PTM traffic is scheduled for a number of monitoring periods, then no further monitoring will occur as it will be assumed that the service being provided using SC-PTM associated with a particular G-RNTI has completed, ceased or is suspended.

### SC-PTM Only Traffic

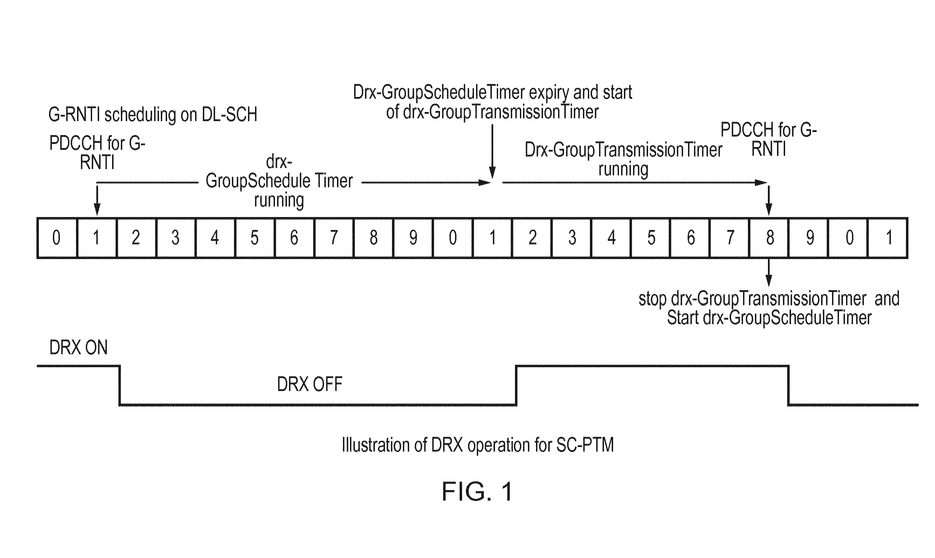

Figure 1 illustrates the discontinuous reception operation based on the newly-introduced group based timers; drx-GroupScheduleTimer and drx-GroupTransmissionTimer. The user equipment discontinuous reception on and off cycles with respect to the drx-GroupScheduleTimer and drx-GroupTransmissionTimer are also shown. If the user equipment is only interested in SC-PTM and there is no unicast traffic, then the user equipment discontinuous reception on/offbehaviour simply follows the newly introduced timers start and expiry as illustrated in Figure 1. As mentioned above, in one embodiment, when no SC-PTM traffic is scheduled for a number of monitoring periods, then no further monitoring will occur for that G-RNTI as it will be assumed that the service being provided using SC-PTM associated that G-RNTI has completed, ceased or is suspended.

### SC-PTM and Unicast Traffic

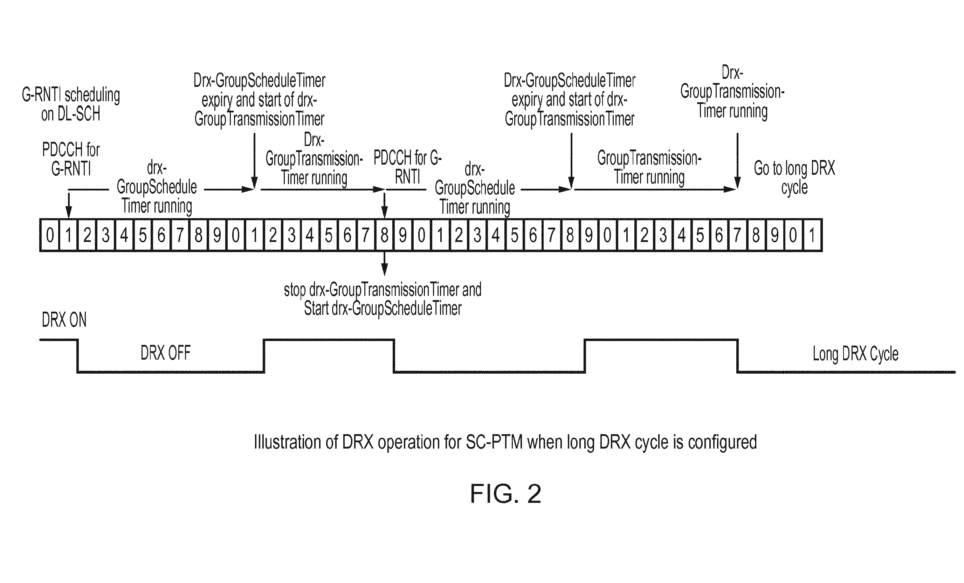

Figure 2 illustrates the discontinuous reception operation when the user equipment is configured with a legacy long discontinuous reception cycle for unicast traffic and using the newly-introduced SC-PTM-based timers for SC-PTM traffic. Because the user equipment is between monitoring intervals for unicast transmissions, the discontinuous reception operation follows the start and expiry of the newly-introduced timers. Upon expiry of the drx-GroupTransmissionTimer (assuming that no SC-PTM traffic has been scheduled for the associated G-RNTI and so the service being provided using SC-PTM associated that G-RNTI is assumed to have completed, ceased or suspended) and if long discontinuous reception is configured for the user equipment (and short discontinuous reception is not configured), the user equipment uses the long discontinuous reception cycle. If, however, short discontinuous reception is configured for the user equipment, upon the expiry of the drx-GroupTransmissionTimer (assuming that no SC-PTM traffic has been scheduled for the associated G-RNTI and so the service being provided using SC-PTM associated that G-RNTI is assumed to have completed, ceased or suspended), the user equipment follows short discontinuous reception cycle. This would allow for additional scheduling instances for the network to schedule the user equipment before the user equipment goes to long discontinuous reception. If however, the network wants to send the user equipment to long discontinuous reception immediately after the end of SC-PTM session, then the network commands the user equipment to go to long discontinuous reception either using a long discontinuous reception MAC CE or using RRC configuration which controls the user equipment behaviour.

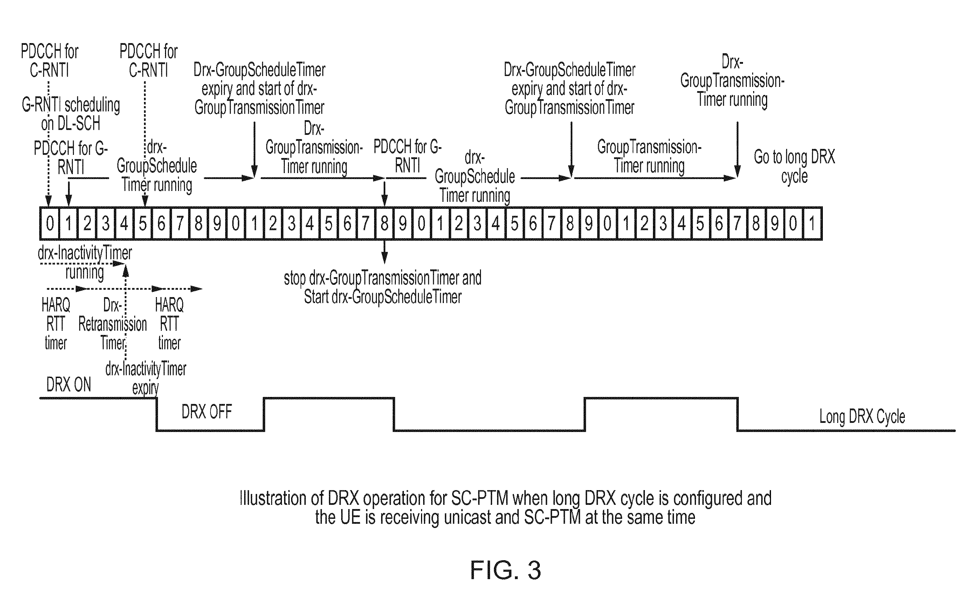

Figure 3 illustrates the discontinuous reception operation when receiving unicast and SC-PTM traffic. The user equipment is configured with the long discontinuous reception cycle (no short discontinuous reception cycle). The timers related to unicast discontinuous reception operation are indicated. Upon the reception of the last successful HARQ retransmission, user equipment monitoring of PDCCH for unicast transmission is completed and the discontinuous reception operation follows the newly introduced timers for SC-PTM reception until the expiry of the drx-GroupTransmisisonTimer. If a short discontinuous reception cycle is configured, then the user equipment follows the short discontinuous reception cycle operation at the successful reception of the last HARQ retransmission for unicast as well as the expiry of drx-GroupTransmisisonTimer.

In one embodiment, the drx-GroupScheduleTimer and drx-GroupTransmissionTimer are configured per G-RNTI. If the User equipment is receiving more than one service on more than one G-RNTIs, then the user equipment operates the start and stop of the timer values separately for each G-RNTI.

In one embodiment, the drx-GroupScheduleTimer and drx-GroupTransmissionTimer are configured by RRC at the time of SC-PTM bearer setup for each G-RNTI. In another embodiment, timer values are common for all SC-PTM services and/or hardcoded in the standard.

In one embodiment, the drx-GroupScheduleTimer and drx-GroupTransmissionTimer are configured per group of G-RNTIs.

In one embodiment, the drx-GroupScheduleTimer and drx-GroupTransmissionTimer values to be applied for the discontinuous reception operation are provided to the user equipment together with the scheduling assignment addressed to G-RNTI. Thus the discontinuous reception operation can be mapped to dynamic scheduling of SC-PTM such each scheduling occasion can be flexible and may be configured based on the traffic pattern, available traffic or by a base station implementation-based decision. The drx-GroupScheduleTimer and drx-GroupTransmissionTimer can either be provided as control data or together with the user plane data.

An example of the required modification to TS36.321 in specifying the enhanced discontinuous reception operation is shown below. This example highlights the interaction between the long discontinuous reception and short discontinuous reception cycle together with reception of SC-PTM. Depending on the SC-PTM solution, the base station may or may not know the reception of G-RNTI by the user equipment at a given time. Therefore, the user equipment operation when receiving the long discontinuous reception MAC CE, the short discontinuous reception Mac CE while receiving or interested in receiving SC-PTM are highlighted in the example.

---an example of specification modification required to support discontinuous reception while receiving SC-PTM --------------

### 5.7 Discontinuous Reception (DRX)

*The MAC entity may be configured by RRC with a DRX functionality that controls the UE's PDCCH monitoring activity for the MAC entity's C-RNTI, TPC-PUCCH-RNTI, TPC-PUSCH-RNTI, Semi-Persistent Scheduling C-RNTI (if configured), G-RNTI (if configured) and eIMTA-RNTI (if configured). When in RRC_CONNECTED, if DRX* is *configured*, *the MAC entity is allowed to monitor the PDCCH discontinuously using the DRX operation specified in this subclause; otherwise the MAC entity monitors the PDCCH continuously*. *When using DRX operation, the MAC entity shall also monitor PDCCH according to requirements found in other subclauses of this specification. RRC controls DRX operation by configuring the timers on Duration Timer, drx-Inactivity Timer, drx-Retransmission Timer (one per DL HARQ process except for the broadcast process), the long DRX*-*Cycle*, *the value of the drxStartOffset and optionally the drxShortCycleTimer, shortDRX-Cycle,* *drx*-*GroupScheduleTimer and drx-GroupTransmissionTimer (configuration are provided per G-RNTI). A HARQ RTT timer per DL HARQ process (except for the broadcast process)* is *also defined (see subclause 7.7).*

*When a DRX cycle is configured*, *the Active Time includes the time while:*
- *onDurationTimer or drx-InactivityTimer or drx-RetransmissionTimer or mac-ContentionResolutionTimer (as descried in subclause 5.1.5) or drx-GroupTransmissionTimer is running; or*
- *a Scheduling Request is sent on PUCCH and is pending (as described in subclause 5.4.4); or*
- *an uplink grant for a pending HARQ retransmission can occur and there* is *data in the corresponding HARQ buffer; or*
- *a PDCCH indicating a new transmission addressed to the C-RNTI of the MAC entity has not been received after successful reception of a Random Access Response for the preamble not selected by the MAC entity (as described in subclause 5.1.4).*
*When DRX* is *configured, the MAC entity shall for each subframe:*
- *if a HARQRTT Timer empires in this subframe and the data of the corresponding HARQ process was not successfully decoded:*
   - *start the drx*-*RetransmissionTimer for the corresponding HARQ process*.
- *if a drx*-*GroupScheduleTimer expires in this subframe and the USER EQUIPMENT is interested in receiving SC-PTM:*
   - *start the drx-GroupTransmissionTimer for the corresponding G-RNTI.*
- *if a DRX Command MAC control element or a Long DRX Command MAC control element* is *received* *and neither drx*-*GroupScheduleTimer nor drx-GroupTransmissionTimer running:*
   - *stop onDurationTimer;*
   - *stop drx*-*InactivityTimer*.
- *if drx-InactivityTimer empires or a DRX Command MAC control element* is *received in this subframe and neither drx-GroupScheduleTimer nor drx-GroupTransmissionTimer running:*
   - *if the Short DRX cycle* is *configured:*
      - *start or restart drxShortCycleTimer;*
      - *use the Short DRX Cycle.*
   - *else:*
      - *use the Long DRX cycle.*
- *if drxShortCycleTimer empires in this subframe and* *neither drx-GroupScheduleTimer nor drx*-*GroupTransmissionTimer running:*
   - *use the Long DRX cycle.*
- *if a Long DRX Command MAC control element* is *received* *and neither drx-GroupScheduleTimer nor drx*-*GroupTransmission Timer running:*
   - *stop drxShortCycleTimer;*
   - *use the Long DRX cycle.*
- *If the Short DRX Cycle* is *used and [(SFN* * *10)* + *subframe number] modulo (shortDRX-Cycle)* = *(drxStartOffset) modulo (shortDRX-Cycle); or*
- *if the Long DRX Cycle is used and [(SFN * 10)* + *subframe number] modulo (longDRX-Cycle) = drxStartOffset:*
   - *start onDurationTimer.*
- *during the Active Time, for a PDCCH*-*subframe*, *if the subframe is not required for uplink transmission for half-duplex FDD UE operation, if the subframe is not a half-duplex guard subframe [7] and if the subframe is not part of a configured measurement gap; or*
- *during the Active Time, for a subframe e other than a PDCCH*-*subframe and for a UE capable of simultaneous reception and transmission in the aggregated cells, if the subframe is a downlink subframe indicated by a valid eIMTA L1 signalling for at least one serving cell not configured with schedulingCellId [8] and if the subframe is not part of a configured measurement gap; or*
- *during the Active Time*, *for a subframe other than a PDCCH*-*subframe and for a UE not capable of simultaneous reception and transmission in the aggregated cells, if the subframe* is *a downlink subframe indicated by a valid eIMTA L1 signalling for the SpCell and if the subframe* is *not part of a configured measurement gap:*
   - *monitor the PDCCH;*
   - *if the PDCCH indicates a DL transmission or if a DL assignment has been configured for this subframe:*
      - *start the HARQ RTT Timer for the corresponding HARQ process;*
      - *stop the drx*-*RetransmissionTimer for the corresponding HARQ process.*
- *if the PDCCH indicates a new transmission (DL or UL):*
   - *start or restart drx-InactivityTimer.*
- *if the PDCCH indicates an assignment for G-RNTI or if a DL assignment for G-RNTI has been configured for this subframe:*
   - *start the drx-GroupScheduleTimer for the corresponding G-RNTI;*
   - *stop the drx*-*GroupTransmissionTimer for the corresponding G-RNTI.*
- *in current subframe n, if the MAC entity would not be in Active Time considering grants*/*assignments*/*DRX Command MAC control elements*/*Long DRX Command MAC control elements received and Scheduling Request sent until and including subframe n-5 when evaluating all DRX Active Time conditions as specified in this subclause, type-0-triggered SRS [2] shall not be deported.*
- *if CQI masking (cqi-Mnsk)* is *setup by upper layers:*
   - *in current subframe n, if onDurationTimer would not be running considering grants*/*assignments*/*DRX Command MAC control elements*/*Long DRX Command MAC control elements received until and including subframe n-5 when evaluating all DRX Active Time conditions as specified in this subclause, CQI*/*PMI*/*RI*/*PTI on PUCCH shall not be deported.*
- *else:*
   - *in current subframe n, if the MAC entity would not be in Active Time considering grants*/*assignments*/*DRX Command MAC control elements*/*Long DRX Command MAC control elements received and Scheduling Request sent until and including subframe n-5 when evaluating all DRX Active Time conditions as specified in this subclause, CQI*/*PMI*/*RI*/*PTI on PUCCH shall not be deported.*

*Regardless of whether the MAC entity* is *monitoring PDCCH or not, the MAC entity receives and transmits HARQfeedback and transmits type-1-triggered SRS [2] when such* is *expected.*

*NOTE: The same Active Time applies to all activated serving cell(s).*

*NOTE: In case of downlink spatial multiplexing, if a TB* is *received while the HARQ RTT Timer* is *running and the previous transmission of the same TB was received at least N subframes before the current subframe (where N corresponds to the HARQ RTT Timer), the MAC entity should prowess it and restart the HARQ RTT Timer*.

For completeness, an explanation will now be given of existing (legacy) DRX operation. The MAC entity may be configured by RRC with a discontinuous reception functionality that controls the user equipment's PDCCH monitoring activity. The legacy discontinuous reception is defined per MAC entity and PDCCH monitoring on C-RNTI, TPC-PUCCH-RNTI, TPC-PUSCH-RNTI, Semi-Persistent Scheduling C-RNTI (if configured) and eIMTA-RNTI (if configured) are controlled by the discontinuous reception.

When in RRC_CONNECTED, if discontinuous reception is configured, the MAC entity is allowed to monitor the PDCCH discontinuously using the discontinuous reception operation specified in this subclause; otherwise the MAC entity monitors the PDCCH continuously.

RRC controls the discontinuous reception operation by configuring the timers onDurationTimer, drx-InactivityTimer, drx-RetransmissionTimer (one per DL HARQ process except for the broadcast process), the longDRX-Cycle, the value of the drxStartOffset and optionally the drxShortCycleTimer and shortDRX-Cycle. A HARQ RTT timer is also used in determining the discontinuous reception operation and HARQ RTT is defined per DL HARQ process (except for the broadcast process).
The "active time" is defined for the discontinuous reception operation where while in active time, the user equipment monitors PDCCH. The Active Time includes the time while:
- onDurationTimer or drx-InactivityTimer or drx-RetransmissionTimer or mac-ContentionResolutionTimer is running; or
- a Scheduling Request is sent on PUCCH and is pending ; or
- an uplink grant for a pending HARQ retransmission can occur and there is data in the corresponding HARQ buffer; or
- a PDCCH indicating a new transmission addressed to the C-RNTI of the MAC entity has not been received after successful reception of a Random Access Response for the preamble not selected by the MAC entity (as described in subclause 5.1.4).

The full detail of the legacy discontinuous reception operation is specified in TS 36.321.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A user equipment method, comprising:
configuring monitoring periods within which to monitor a downlink control channel for a radio resource allocation associated with a group to which said user equipment is subscribed, said radio resource allocation identifying radio resources allocated within a downlink traffic channel which carry single cell point to multipoint transmissions traffic for said group.

2. The method of claim 1, wherein each monitoring period is separated by an interval period within which not to monitor said downlink control channel for a radio resource allocation associated with said group.

3. The method of claim 2, wherein said interval period is defined by an interval timer received by said user equipment.

4. The method of claim 3, wherein said configuring comprises activating said interval timer following identifying a radio resource allocation associated with said group and performing no monitoring of said downlink control channel while said interval timer is running.

5. The method of claim any preceding claim, wherein each monitoring period has a duration during which to monitor said downlink control channel for a radio resource allocation associated with said group.

6. The method of claim 5, wherein said duration is defined by a duration timer received by said user equipment.

7. The method of claim 6, wherein said configuring comprises activating said duration timer on expiry of said interval timer and performing monitoring of said downlink control channel while said duration timer is running.

8. The method of claims 6 or 7, wherein said configuring comprises activating said interval timer on expiry of said duration timer and performing no monitoring of said downlink control channel while said interval timer is running.

9. The method of any preceding claim, wherein said configuring comprises configuring monitoring periods for each of a plurality of groups to which said user equipment is subscribed.

10. The method of any preceding claim, comprising configuring monitoring periods within which to monitor said downlink control channel for a radio resource allocation associated said user equipment, said radio resource allocation identifying radio resources allocated within a downlink traffic channel which unicast traffic for said user equipment.

11. The method of any preceding claim, comprising ceasing to configure monitoring periods for a group when said downlink control channel carries no radio resource allocation associated with said group during a number of said monitoring periods.

12. User equipment, comprising:
configuration logic operable to configure monitoring periods within which to monitor a downlink control channel for a radio resource allocation associated with a group to which said user equipment is subscribed, said radio resource allocation identifying radio resources allocated within a downlink traffic channel which carry single cell point to multipoint transmissions traffic for said group.

13. A network node method, comprising:
configuring user equipment with monitoring periods within which to monitor a downlink control channel for a radio resource allocation associated with a group to which said user equipment is subscribed, said radio resource allocation identifying radio resources allocated within a downlink traffic channel which carry single cell point to multipoint transmissions traffic for said group.

14. A network node, comprising:
configuring logic operable to configure user equipment with monitoring periods within which to monitor a downlink control channel for a radio resource allocation associated with a group to which said user equipment is subscribed, said radio resource allocation identifying radio resources allocated within a downlink traffic channel which carry single cell point to multipoint transmissions traffic for said group.

15. A computer program product operable, when executed on a computer, to perform the method steps of any one of claims 1 to 11 and 13.
